# EUROPEAN PATENT APPLICATION

(11) **EP 3 785 832 A1**
(43) Date of publication of application: **03.03.2021**
(21) Application number: 19791655.4
(22) Date of filing: 18.04.2019
(51) Int. Cl.: B23B 31/00, B23B 31/175, F16J 15/3232

(54) **SEAL STRUCTURE FOR OSCILLATING TYPE CHUCK, AND OSCILLATING TYPE CHUCK**

(30) Priority: 27.04.2018 JP 2018087038
(71) Applicant: Howa Machinery, Ltd., Kiyosu-shi, Aichi 452-8601 (JP)
(72) Inventor: NAGAOSA Hiroshi, Kiyosu-shi, Aichi 452-8601 (JP)
(74) Representative: Liesegang, Eva
(86) International application number: PCT/JP2019/016606
(87) International publication number: WO 2019/208379

(57) **Abstract**

A sealing part is provided between a claw opening-and-closing member and a support member. The sealing part includes a first contact part that is in contact with the claw opening-and-closing member, and a second contact part that is in contact with the claw opening-and-closing member at a position different from that of the first contact part.

## Description

### TECHNICAL FIELD

The present invention relates to a swing-chuck sealing structure which seals a gap between a support member and a claw opening-and-closing member, and a swing chuck.

### BACKGROUND ART

A chuck main body of a swing chuck used in a machine tool has been conventionally provided with a plurality of accommodation holes. In each accommodation hole, a claw opening-and-closing member having a grasping claw at a distal end thereof is swingably provided. Support members are secured on an end of the chuck main body on the side of the grasping claw. The support member has an inner peripheral surface opposed to the corresponding claw opening-and-closing member. The chuck main body is provided with a guide hole which is provided with a drive member capable of moving in a direction along a chuck axis line. The claw opening-and-closing member is swung by moving the drive member, so that a workpiece is clamped by the grasping claw. A sealing structure is provided between the support member and the claw opening-and-closing member, so as to seal a gap between the support member and the claw opening-and-closing member. As the sealing structure, a structure in which a sealing member is fitted in a recessed groove formed in the inner peripheral surface of the support member as disclosed in Patent Document 1, and a structure in which a sealing member is fixed by a stepped part formed in the support member and a lid member as disclosed in Patent Document 2 are known.

Patent Document 1: JP2008-73809A
Patent Document 2: JP5892471B

### DISCLOSURE OF THE INVENTION

In the above swing chuck, after a workpiece has been processed, a high-pressure air or coolant is blown to the chuck in order to remove chips or sludge or the like, attached to the chuck. However, there is a possibility that the high-pressure air or coolant drives the chips or sludge or the like, into the gap between the support member and the claw opening-and-closing member, and that the chips or sludge or the like, scratch a contact surface of the sealing member to form a leak path. In the sealing structure of Patent Documents 1 and 2, when such a leak path is formed, it may be difficult to prevent the chips or sludge or the like, from entering the inside of the chuck main body. In addition, it may be difficult to prevent a lubricant contained in the chuck main body from flowing outside the chuck main body. The formation of the aforementioned leak path may accelerate a timing at which the sealing member is exchanged with another one.

In view of the above problem, the object of the present invention is to provide a swing-chuck sealing structure which has a simple configuration but can seal a gap between a support member and a claw opening-and-closing member for a long period of time, and a swing chuck.

The present invention provides a swing-chuck sealing structure for sealing a gap between a claw opening-and-closing member and a support member, the claw opening-and-closing member being swingably provided in an accommodation hole of a chuck main body and having a grasping claw at a distal end thereof, the support member being provided on an end of the chuck main body on a side of the grasping claw and having an inner circumferential surface opposed to the claw opening-and-closing member,
the sealing structure comprising:
a sealing part provided between the claw opening-and-closing member and the support member,
wherein the sealing part includes a first contact part that is in contact with the claw opening-and-closing member, and a second contact part that is in contact with the claw opening-and-closing member at a position different from that of the first contact part.

In the aforementioned swing-chuck sealing structure, the sealing part may include a first sealing member including the first contact part, and a second sealing member including the second contact part, the second sealing member being different from the first sealing member.

In the aforementioned swing-chuck sealing structure, the first sealing member may include a plurality of the first contact parts in contact with the claw opening-and-closing member at positions different from one another.

In the aforementioned swing-chuck sealing structure, the sealing part may be composed of a single sealing member including the first contact part and the second contact part.

In addition, the present invention provides: a swing chuck comprising:
a claw opening-and-closing member swingably provided in an accommodation hole of a chuck main body and having a grasping claw at a distal end thereof;
a support member provided on an end of the chuck main body on a side of the grasping claw and having an inner circumferential surface opposed to the claw opening-and-closing member; and
the aforementioned swing-chuck sealing structure provided between the claw opening-and-closing member and the support member and sealing a gap between the claw opening-and-closing member and the support member.

In the aforementioned swing chuck may further comprise a drive member provided to be movable in a direction along a chuck axis line, the drive member being configured to swing the claw opening-and-closing member.

According to the present invention, the sealed stated of the gap between the support member and the claw opening-and-closing member can be maintained for a long period of time, by a simple structure.

### BRIEF DESCRIPTION OF THE DRAWINGS

Fig. 1 is a view showing a swing chuck in this embodiment.
Fig. 2 is a cross-sectional view of Fig. 1 taken along a line II-II, showing a sealing structure of the swing chuck in this embodiment.
Fig. 3 is a view showing a modification example of the sealing structure of the swing chuck shown in Fig. 2.
Fig. 4 is a view showing another modification example of the sealing structure of the swing chuck shown in Fig. 2.

### DESCRIPTION OF EMBODIMENTS

Herebelow, a swing-chuck sealing structure and a swing chuck according to this embodiment are described with reference to the drawings. The swing chuck is an apparatus used for fixing a workpiece in a machine tool.

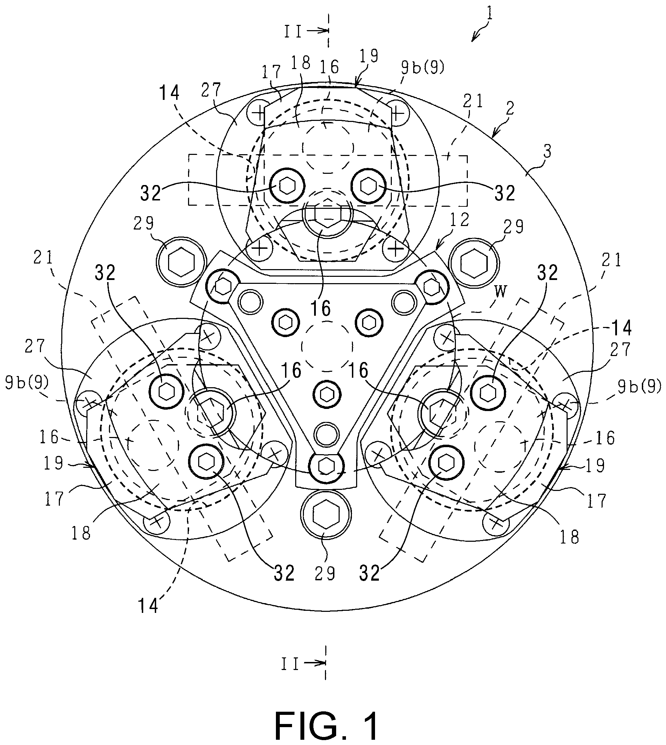

A swing chuck 1 shown in Fig. 1 has a chuck main body 2. The chuck main body 2 has a front body 3 and a rear body 4. A rear end surface of the front body 3 is closed by the rear body 4 by means of an attachment bolt (not shown), and an inner space 5 is formed inside the chuck main body 2.

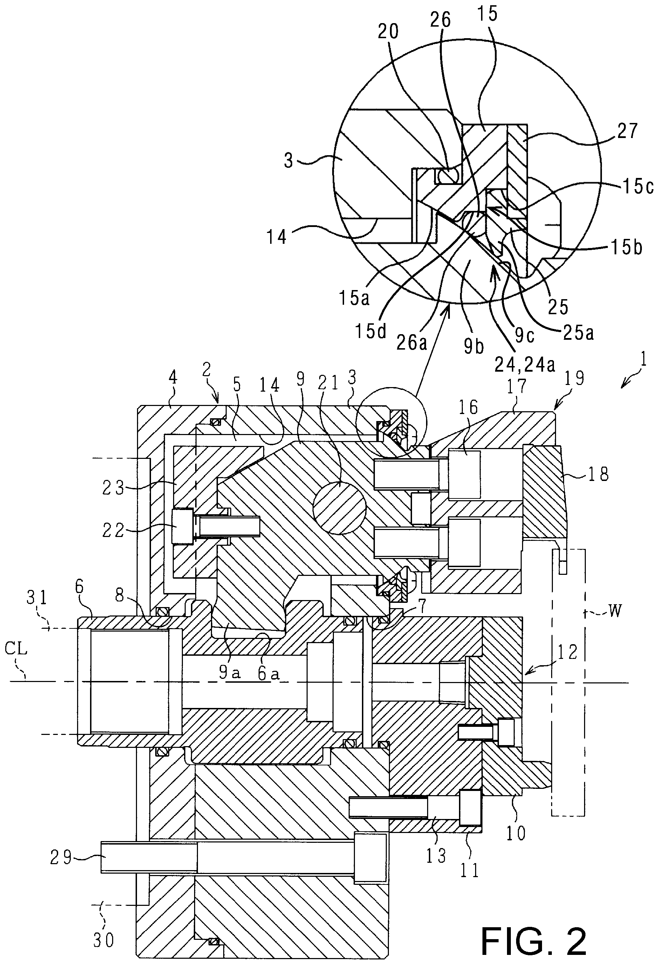

As shown in Fig. 2, a drive member 6 is disposed along a chuck axis line CL of the chuck main body 2. The drive member 6 is configured to be moved by a not-shown drive source in a direction along the chuck axis line CL, i.e., forward (right side in Fig. 2) and rearward (left side in Fig. 2). The front body 3 and the rear body 4 are respectively provided with guide holes 7 and 8. The drive member 6 is guided through both the guide holes 7 and 8. Namely, the drive member 6 is disposed along the chuck axis line CL, and is movable inside the guide holes 7 and 8.

The drive member 6 is provided with an engagement groove 6a. A claw opening-and-closing member 9 is provided with an engagement part 9a. The engagement part 9a is engaged with the engagement groove 6a. In order to close the guide hole 7, a stopper member 12 including a first stopper member 10 and a second stopper member 11 is secured on the front body 3 by means of a bolt member 13.

The front body 3 is provided with a plurality of (three in this embodiment) stepped accommodation holes 14 that are disposed equidistantly in a circumferential direction. Support members 15 are secured on a front end (an end on the side of a below-described grasping claw 19) of the front body 3 of the chuck main body 2 by means of a bolt member (not shown). The support member 15 has an inner circumferential surface 15a that is opposed to an outer circumferential surface 9c of a below-described spherical surface part 9b of the corresponding claw opening-and-closing member 9. The inner circumferential surface 15a is formed to have a spherical shape that is concentric with the outer circumferential surface 9c of the corresponding spherical surface part 9b.

The claw opening-and-closing member 9 is swingably provided in the corresponding accommodation hole 14 of the chuck main body 2. The grasping claw 19 is provided on a front end (distal end) of the claw opening-and-closing member 9. The grasping claw 19 is not accommodated in the accommodation hole 14 and is disposed in front of the chuck main body 2. The grasping claw 19 has a first grasping claw 17 that is fixed to a distal end of the claw opening-and-closing member 9 by means of a bolt member 16, and a second grasping claw 18 that is fixed to the first grasping claw 17 by means of a bolt member 32 (see Fig. 1).

The support member 15 is fitted in a front end of the front body 3 via an O-ring 20. The O-ring 20 prevents chips or sludge or the like, from coming through a gap between the front body 3 and the support member 15 to enter the chuck main body 2 from outside, and prevents a lubricant from discharging from inside the chuck main body 2.

Support shafts 21 are installed on the front body 3 across the corresponding accommodation hole 14. The claw opening-and-closing member 9 is pivotally supported on the support shaft 21. The claw opening-and-closing member 9 has the spherical surface part 9b. The spherical surface part 9b includes the spherical outer circumferential surface 9c opposed to the inner circumferential surface 15a of the support member 15. The outer circumferential part 9c partly forms a spherical surface around the support shaft 21.

A block 23 is fixed on a rear end of the claw opening-and-closing member 9 by means of a bolt member 22. A centrifugal force generated in the block 23 when the chuck 1 is rotated generates a force that turns radially outward a rear end of the claw opening-and-closing member 9. Thus, a force that turns radially inward the grasping claw 19 of the claw opening-and-closing member 9 generates, whereby a workpiece W is continuously grasped.

As shown in Fig. 2, a sealing structure 24 is provided in a gap between the support member 15 and the claw opening-and-closing member 9. The gap between the the support member 15 and the claw opening-and-closing member 9 is sealed by the sealing structure 24.

The sealing structure 24 has a sealing part 24a provided between the support member 15 and the claw opening-and-closing member 9. The sealing part 24a in this embodiment has an annular first sealing member 25 and an annular second sealing member 26. The first sealing member 25 includes a single first contact part 25a, and the second sealing member 26 includes a single second contact part 26a. For example, the first sealing member 25 may be a sealing member adapted to chips or sludge or the like. The second sealing member 26 may be a sealing member adapted to a lubricant. In this case, an O-ring may be used for the second sealing member 26.

The support member 15 is provided with a stepped hole 15b extending from the inner circumferential surface 15a. In this embodiment, the stepped hole 15b has a large diameter part 15c and a small diameter part 15d. The large diameter part 15c is disposed nearer to the grasping claw 19 than the small diameter part 15d, and has a diameter larger than that of the small diameter part 15d.

The first sealing member 25 is fitted in the large diameter part 15c of the stepped hole 15b. A lid member 27 is secured to the support member 15. The first sealing member 25 is sandwiched between the lid member 27 and the support member 15 in a direction along the chuck axis line CL. The first contact part 25a provided on an inner circumferential side of the first sealing member 25 is in contact with the spherical surface part 9b of the claw opening-and-closing member 9. The first sealing member 25 may prevent chips or sludge or the like, from passing through the gap between the support member 15 and the claw opening-and-closing member 9 into the chuck main body 2 from outside.

The second sealing member 26 is fitted in the small diameter part 15d of the stepped hole 15b. The second sealing member 26 is sandwiched between the first sealing member 25 and the support member 15 in a direction along the chuck axis line CL. Namely, the second sealing member 26 is sandwiched between the lid member 27 and the support member 15, via the first sealing member 25. The first sealing member 25 and the second sealing member 26 are in contact with each other. The second contact part 26a provided on an inner circumferential side of the second sealing member 26 is in contact with the spherical surface part 9b of the claw opening-and-closing member 9. The second sealing member 26 may prevent a lubricant from passing through the gap between the support member 15 and the claw opening-and-closing member 9 to flow out from inside the chuck main body 2.

The swing chuck 1 having the above configuration is secured on a front end of a main spindle part 30 of a machine tool, such as a lathe, by means of an attachment bolt 29 of the chuck main body 2, so that the chuck main body 2 is rotated together with rotation of the main spindle part 30. The drive member 6 is connected through a connecting rod 31 to a piston (not shown) of a rotation cylinder (not shown) installed on a rear end of the main spindle part 30. By actuating the piston, the drive member 6 is moved forward and rearward in a direction along the chuck axis line CL. Thus, when the piston is moved rearward, the claw opening-and-closing member 9 is swung around the support shaft 21, so that the grasping claw 19 is turned radially inward to grasp a workpiece W. On the other hand, when the piston is moved forward, the grasping claw 19 is turned radially outward to draw away from the workpiece W.

After a workpiece W has been processed with the use of the chuck 1, a high-pressure air or coolant is blown to the chuck 1 from the front thereof, in order to eliminate chips or sludge or the like, attached to the chuck 1. In this case, the chips or sludge or the like, may be driven into the gap between the support member 15 and the claw opening-and-closing member 9 can be scratched a sealed portion (a portion of the contact part 25a, 26a in contact with the spherical surface part 9b of the claw opening-and-closing member 9), and a leak path may be formed by the scratch. However, in the sealing structure 24 in this embodiment, the gap between the support member 15 and the claw opening-and-closing member 9 is sealed by the first sealing member 25 including the first contact part 25a and the second sealing member 26 including the second contact part 26a. Thus, even when one of the sealing members is scratched to form a gap, the other sealing member can seal the gap between the support member 15 and the claw opening-and-closing member 9 for a long period of time.

Since the first contact part 25a of the first sealing member 25 is in contact with the claw opening-and-closing member 9, the gap between the first sealing member 25 and the claw opening-and-closing member 9 can be sealed. Thus, a gap between the first sealing member 25 and the claw opening-and-closing member 9, which is a movable member, can be effectively sealed. Similarly, since the second contact part 26a of the second sealing member 26 is in contact with the claw opening-and-closing member 9, a gap between the second sealing member 26 and the claw opening-and-closing member 9 can be sealed. Thus, the gap between the second sealing member 26 and the claw opening-and-closing member 9, which is a movable member, can be effectively sealed.

As described above, according to this embodiment, the gap between the support member 15 and the claw opening-and-closing member 9 can be sealed by the sealing part 24a. The sealing part 24a includes the first contact part 25a that is in contact with the claw opening-and-closing member 9, and the second contact part 26a that is in contact with the claw opening-and-closing member 9 at a position different from the first contact part 25a. Thus, even when one of the contact parts is scratched to form a gap, the other contact part can seal the gap between the support member 15 and the claw opening-and-closing member 9.

In addition, according to this embodiment, the sealing part 24a of the sealing structure 24 has the first sealing member 25 and the second sealing member 26 different from the first sealing member 25. Thus, one of the first sealing member 25 and the second sealing member 26 can serve as a sealing member adapted to chips or sludge or the like, entering the chuck main body 2 from outside, and the other can serve as a sealing member adapted to a lubricant contained in the chuck main body 2. In other words, the first sealing member 25 and the second sealing member 26 can be used in different applications. Therefore, the gap between the support member 15 and the claw opening-and-closing member 9 can be effectively sealed, and their sealed state can be maintained for a long period of time.

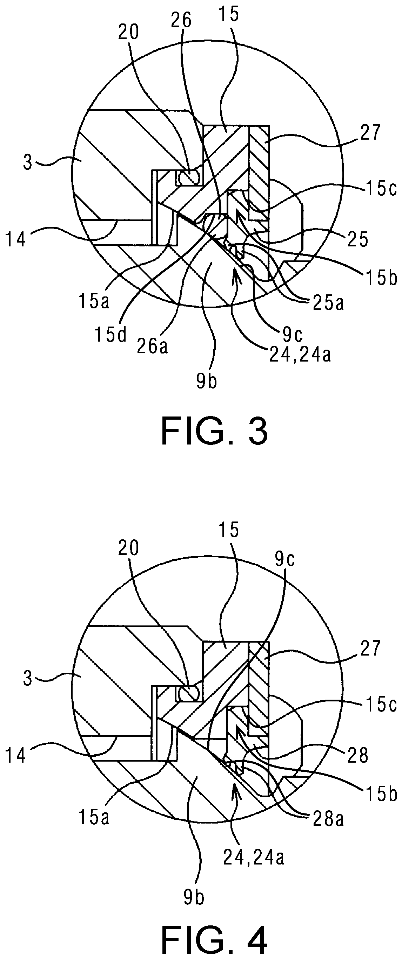

In the aforementioned embodiment, the example in which the first sealing member 25 includes the single first contact part 25a is described. However, the present invention is not limited thereto. As shown in Fig. 3, the first sealing member 25 may include a plurality of first contact parts 25a formed like projections. In this case, the first sealing member 25 and the second sealing member 26 are in contact with the claw opening-and-closing member 9 at three or more positions. Namely, the number of positions to be sealed on the claw opening-and-closing member 9 side can be increased. Thus, a timing when the first sealing member 25 is exchanged can be delayed (i.e., a duration of use of the sealing member can be elongated). For example, as shown in Fig. 3, the first sealing member 25 may includes two first contact parts 25a. In this case, the two contact parts 25a are in contact with the outer circumferential surface 9c of the spherical surface part 9b of the claw opening-and-closing member 9 at positions different from each other.

In addition, in the aforementioned embodiment, the example in which the sealing structure 24 has the first sealing member 25 including the first contact part 25a, and the second sealing member 26 including the second sealing part 26a is described. However, the present invention is not limited thereto. As shown in Fig. 4, the sealing part 24a of the sealing structure 24 may be composed of a single sealing member 28 which includes a plurality of contact parts 28a formed like projections, and the respective contact parts 28a may be in contact with the spherical surface part 9b of the claw opening-and-closing member 9 at positions different from one another. Also in this case, the sealed state can be maintained for a long period of time, and a timing when the sealing member is exchanged can be delayed (i.e., a duration of use of the sealing member can be elongated) For example, as shown in Fig. 4, the sealing member 28 may include two contact parts 28a. In this case, the two contact parts 28a may be in contact with the spherical surface part 9b of the claw opening-and-closing member 9 at positions different from each other. As shown in Fig. 4, when the sealing part 24a is composed of the single sealing member 28, the stepped hole 15b may not include the small diameter part 15d.

## Claims

1. A swing-chuck sealing structure for sealing a gap between a claw opening-and-closing member and a support member, the claw opening-and-closing member being swingably provided in an accommodation hole of a chuck main body, and having a grasping claw at a distal end thereof, the support member being provided on an end of the chuck main body on a side of the grasping claw, and having an inner circumferential surface opposed to the claw opening-and-closing member,
the sealing structure comprising:
a sealing part provided between the claw opening-and-closing member and the support member,
wherein the sealing part includes a first contact part that is in contact with the claw opening-and-closing member, and a second contact part that is in contact with the claw opening-and-closing member at a position different from that of the first contact part.

2. The swing-chuck sealing structure according to claim 1, wherein
the sealing part includes a first sealing member including the first contact part, and a second sealing member including the second contact part, the second sealing member being different from the first sealing member.

3. The swing-chuck sealing structure according to claim 2, wherein
the first sealing member includes a plurality of the first contact parts in contact with the claw opening-and-closing member at positions different from one another.

4. The swing-chuck sealing structure according to claim 1, wherein
the sealing part is composed of a single sealing member including the first contact part and the second contact part.

5. A swing chuck comprising:
a claw opening-and-closing member swingably provided in an accommodation hole of a chuck main body and having a grasping claw at a distal end thereof;
a support member provided on an end of the chuck main body on a side of the grasping claw and having an inner circumferential surface opposed to the claw opening-and-closing member; and
the swing-chuck sealing structure according to any one of claims 1 to 4, the sealing structure being provided between the claw opening-and-closing member and the support member, and sealing a gap between the claw opening-and-closing member and the support member.

6. The swing chuck according to claim 5, further comprising a drive member provided to be movable in a direction along a chuck axis line, the drive member being configured to swing the claw opening-and-closing member.
